# EUROPEAN PATENT APPLICATION

(11) **EP 4 832 083 A1**
(43) Date of publication of application: **28.10.2026**
(21) Application number: 24908033.4
(22) Date of filing: 17.12.2024
(51) Int. Cl.: H01M 4/36, H01M 4/525, H01M 4/505, C01G 53/00, H01M 4/131, H01M 10/052, H01M 4/02

(54) **CATHODE ACTIVE MATERIAL FOR LITHIUM SECONDARY BATTERY, METHOD OF MANUFACTURING SAME, AND LITHIUM SECONDARY BATTERY COMPRISING SAME**

(30) Priority: 18.12.2023 KR 20230184345
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); HAN, Chang Joo, Pohang-si, Gyeongsangbuk-do 37859 (KR); YU, Byongyong, Pohang-si, Gyeongsangbuk-do 37859 (KR); HONG, Kijoo, Pohang-si, Gyeongsangbuk-do 37859 (KR); LEE, Dong Jae, Pohang-si, Gyeongsangbuk-do 37859 (KR)
(74) Representative: Pfenning, Meinig & Partner mbB
(86) International application number: PCT/KR2024/020541
(87) International publication number: WO 2025/135750

(57) **Abstract**

The present invention relates to a positive electrode active material for a lithium secondary battery, including a single-particle-form lithium metal oxide having a nickel (Ni)-containing layered crystal structure and a coating layer surrounding an entire surface of the lithium metal oxide and containing an aluminum (Al) compound, wherein the aluminum compound includes LiAlO₂ and Al₂O₃, and a content of LiAlO₂ is 12 to 40 wt% based on a total weight of LiAlO₂ and Al₂O₃.

## Description

### [TECHNICAL FIELD]

The present invention relates to a positive electrode active material for a lithium secondary battery, a method for manufacturing the same, and a lithium secondary battery including the same, and more specifically, to a single-particle-based positive electrode active material for a lithium secondary battery, a method for manufacturing the same, and a lithium secondary battery including the same.

### [BACKGROUND ART]

As positive electrode active materials of lithium secondary batteries, lithium cobalt oxide (LiCoO₂), lithium nickel oxide (LiNiO₂), lithium manganese oxide (LiMnO₂ or LiMnO₄, etc.), lithium iron phosphate compounds (LiFePO₄), and the like have been used. Among these, lithium cobalt oxide has advantages of a high operating voltage and excellent capacity characteristics, but cobalt, which is a raw material thereof, is expensive and has unstable supply, making it difficult to commercially apply lithium cobalt oxide to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more transition metals have been developed to compensate for problems of lithium transition metal oxides including Ni, Co, or Mn alone, and among these, lithium nickel cobalt manganese oxide including Ni, Co, and Mn has been widely used in the field of electric vehicle batteries.

Conventional lithium nickel cobalt manganese oxide was generally in the form of spherical secondary particles in which several tens to several hundreds of primary particles are aggregated. However, in the case of lithium nickel cobalt manganese oxide in the form of secondary particles in which many primary particles are aggregated as described above, there are problems in that particle breakage, in which primary particles are detached, is likely to occur during a rolling process when a positive electrode is manufactured, and cracks occur inside particles during charging and discharging. When particle breakage or cracks occur in a positive electrode active material, a contact area with an electrolyte solution increases, thereby increasing gas generation and active material degradation due to side reactions with the electrolyte solution, and thus there is a problem of deteriorated lifespan characteristics.

In addition, recently, demand for high-output and high-capacity batteries such as batteries for electric vehicles has increased, and accordingly, the nickel content in positive electrode active materials has gradually increased, that is, a so-called "high-nickel" trend has emerged. When the nickel content in a positive electrode active material increases, initial capacity characteristics are improved. However, when charging and discharging are repeated, a large amount of highly reactive Ni⁴⁺ ions is generated, structural collapse of the positive electrode active material occurs, and as a result, degradation speed of the positive electrode active material increases, thereby causing a problem of deteriorated lifespan characteristics and reduced battery safety.

In order to solve the above problem, a technology of manufacturing a positive electrode active material in the form of a single particle, rather than secondary particles, by increasing a calcination temperature when manufacturing lithium nickel cobalt manganese oxide has been proposed. In the case of a positive electrode active material in a single-particle form, a contact area with an electrolyte solution is smaller than that of a conventional positive electrode active material in a secondary-particle form, and therefore side reactions with the electrolyte solution are reduced, and particle strength is excellent, so that particle breakage during electrode manufacture is reduced. Accordingly, when a positive electrode active material in a single-particle form is applied, gas generation is reduced and lifespan characteristics are excellent.

However, in order to grow high-nickel-based single-particle-form lithium transition metal oxide into a positive electrode active material having a particle diameter of several micrometers, calcination at a high temperature for a long time is required. At this time, when high-temperature long-time calcination is performed, defects in a layered crystal structure are generated due to over-calcination, and because the active material is manufactured at a relatively high calcination temperature, a rocksalt phase is formed on the particle surface, thereby increasing surface resistance and lowering mobility of lithium ions. Such reduction in lithium ion mobility primarily deteriorates capacity characteristics, and secondarily causes imbalance in lithium ion movement, thereby causing crystal structure deformation and particle cracking, and as a result, lifespan characteristics deteriorate, such as an increase in resistance as cycles proceed.

In addition, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of the battery. However, the water-washing process damages a surface structure of the positive electrode material, increases the possibility of proton exchange, impairs electrochemical characteristics of the positive electrode material, such as capacity and output, increases manufacturing costs of the positive electrode material, and generates wastewater, thereby requiring a separate wastewater treatment facility.

### [DETAILED DESCRIPTION OF THE INVENTION]

### [Technical Problem]

Accordingly, one object of the present invention is to provide a positive electrode active material for a lithium secondary battery, which is a single-particle-form lithium metal oxide, has reduced residual lithium, and has improved capacity and lifespan characteristics, a method for manufacturing the same, and a lithium secondary battery including the same.

### [Technical Solution]

One embodiment of the present invention provides a positive electrode active material for a lithium secondary battery, including a single-particle-form lithium metal oxide having a nickel (Ni)-containing layered crystal structure and a coating layer surrounding an entire surface of the lithium metal oxide and containing an aluminum (Al) compound, wherein the aluminum compound includes LiAlO₂ and Al₂O₃, and a content of LiAlO₂ is 12 to 40 wt% based on a total weight of LiAlO₂ and Al₂O₃.

An average thickness of the coating layer may be 0.1 to 0.65 nm.

An average of difference values between a maximum thickness and a minimum thickness of the coating layer may be 0.5 nm or less.

The lithium metal oxide may have a ratio of a peak intensity of a (003) plane to a peak intensity of a (104) plane (I(003)/I(104)) of 1.514 or more when analyzed by an X-ray diffraction pattern.

A content of an aluminum element in the positive electrode active material may be 550 to 4000 ppm based on a total weight of the positive electrode active material.

The LiAlO₂ may be amorphous.

The Al₂O₃ may be amorphous.

The positive electrode active material may have a residual lithium content of 33500 ppm or less.

A content of nickel in the lithium metal oxide may be 80 mol% or more based on a total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, including preparing a single-particle-form lithium metal oxide having a nickel (Ni)-containing layered crystal structure; and forming a coating layer containing an aluminum compound on the lithium metal oxide by an atomic layer deposition method, wherein a water-washing process is not performed after preparing the lithium metal oxide and before forming the coating layer, the aluminum compound includes LiAlO₂ and Al₂O₃, and a content of LiAlO₂ is 12 to 40 wt% based on a total weight of LiAlO₂ and Al₂O₃.

The atomic layer deposition may be performed for 1 to 7 cycles.

One cycle of the atomic layer deposition may include supplying an aluminum-containing gas onto the lithium metal oxide to adsorb the aluminum-containing gas onto the lithium metal oxide; and supplying and reacting a reactant onto the lithium metal oxide onto which the aluminum-containing gas is adsorbed.

A supply amount of the aluminum-containing gas may be 0.2 to 1.6 wt% based on a total weight of the lithium metal oxide.

A supply amount of the reactant may be 0.002 to 0.01 wt% based on a total weight of the lithium metal oxide.

The atomic layer deposition may be performed at a temperature of 150 to 300°C.

The atomic layer deposition may be performed at a pressure of 1 to 10 torr.

Still another embodiment of the present invention provides a positive electrode for a lithium secondary battery, including the above-described positive electrode active material.

Still another embodiment of the present invention provides a lithium secondary battery including the positive electrode for a lithium secondary battery.

### [Advantageous Effects]

The positive electrode active material for a lithium secondary battery according to one embodiment of the present invention is a single-particle-form lithium metal oxide, and as a very thin and uniform aluminum (Al) coating layer is coated without a separate water-washing process after a calcination process, not only can residual lithium be reduced, but capacity and lifespan characteristics can also be improved.

In addition, the positive electrode active material for a lithium secondary battery according to one embodiment of the present invention can reduce residual lithium without a water-washing process, and thus there is no problem of wastewater treatment of a washing solution, thereby reducing process costs.

### [BRIEF DESCRIPTION OF THE DRAWINGS]

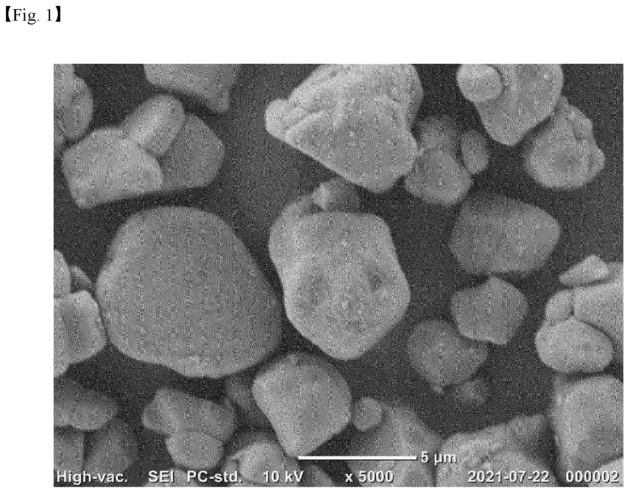

FIG. 1 is an SEM image of a positive electrode active material manufactured according to Example 1.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to one embodiment of the present invention includes a lithium metal oxide in a single-particle form. A positive electrode active material in a single-particle form has a smaller specific surface area than conventional general secondary particles, thereby reducing an amount of gas generation caused by side reactions with an electrolyte solution, has high particle strength to suppress particle breakage during rolling, and can reduce crack occurrence caused by repeated charging and discharging. Accordingly, compared with secondary particles, the positive electrode active material has excellent lifespan and safety, and has an advantage of implementing high energy density of an electrode.

In the present specification, "single particle" is a term used to distinguish from conventional positive electrode active material particles in the form of secondary particles formed by aggregation of several tens to several hundreds of primary particles, and is a concept including a single particle formed of one primary particle and aggregate particles of 50 or fewer primary particles. In addition, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains. In addition, "crystal grain" means a distinguishable region in which atoms in a primary particle form a lattice structure in a predetermined direction.

In addition, a content of nickel in the lithium metal oxide according to the present invention may be 80 mol% or more based on the total number of moles of metals excluding lithium. As the lithium metal oxide contains nickel at a high content as described above, that is, so-called "high nickel," high capacity of a battery can be achieved.

However, in order to grow high-nickel-based single-particle-form lithium transition metal oxide into a positive electrode active material having a particle diameter of several micrometers, calcination at a high temperature for a long time is required. At this time, when high-temperature long-time calcination is performed, defects in a layered crystal structure are generated due to over-calcination, and because the active material is manufactured at a relatively high calcination temperature, a rocksalt phase is formed on the particle surface, thereby increasing surface resistance and lowering mobility of lithium ions. Such reduction in lithium ion mobility primarily deteriorates capacity characteristics, and secondarily causes imbalance in lithium ion movement, thereby causing crystal structure deformation and particle cracking, and as a result, lifespan characteristics deteriorate, such as an increase in resistance as cycles proceed.

In addition, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of the battery. However, the water-washing process damages a surface structure of the positive electrode material, increases the possibility of proton exchange, impairs electrochemical characteristics of the positive electrode material, such as capacity and output, increases manufacturing costs of the positive electrode material, and generates wastewater, thereby requiring a separate wastewater treatment facility.

Accordingly, in the positive electrode active material for a lithium secondary battery according to one embodiment of the present invention, after manufacture of the single-particle-form lithium metal oxide, aluminum coating is performed by an atomic layer deposition process instead of a water-washing process. Accordingly, deterioration of electrochemical characteristics such as capacity of the positive electrode active material due to the water-washing process can be prevented, and process costs can be reduced because there is no problem of wastewater treatment of a washing solution. In addition, as aluminum coating is performed by the atomic layer deposition process, a coating layer can be coated on the entire surface of the lithium metal oxide particles to a very thin and uniform thickness, so that lifespan characteristics can be improved, and capacity characteristics can be improved by minimizing an increase in resistance caused by formation of the coating layer.

More specifically, the positive electrode active material for a lithium secondary battery according to one embodiment of the present invention includes a coating layer surrounding an entire surface of the lithium metal oxide and containing an aluminum (Al) compound. That is, the coating layer is a conformal-type coating layer that uniformly surrounds the entire surface of the single particle, and accordingly, compared with an island-type coating layer, an effect of improving structural stability of the positive electrode active material and an effect of reducing residual lithium can be more favorably implemented, so that effects of improving lifespan and safety of the positive electrode active material can be preferably implemented. Meanwhile, the conformal-type coating layer can be implemented by performing coating by an atomic layer deposition process.

At this time, the aluminum compound includes LiAlO₂ and Al₂O₃, and a content of LiAlO₂ is 12 to 40 wt%, and more specifically may be 28 to 40 wt%, based on a total weight of LiAlO₂ and Al₂O₃. The content of LiAlO₂ in the above range may be higher than a content when a coating process is performed after performing a water-washing process after manufacture of the lithium metal oxide. That is, when a water-washing process is performed after manufacture of the lithium metal oxide, residual lithium (LiOH and/or Li₂CO₃) on the surface is reduced, and thus the content of LiAlO₂ in the coating layer is reduced. In contrast, in the present invention, the coating process is performed without performing a water-washing process, and therefore the content of LiAlO₂ in the coating layer can be derived within the above range. At this time, when the content of LiAlO₂ satisfies the above range, effects of reducing residual lithium of the positive electrode active material and improving capacity and lifespan characteristics can be preferably implemented.

Meanwhile, a weight ratio of LiAlO₂ to the total weight of LiAlO₂ and Al₂O₃ in the coating layer can be confirmed through X-ray Photoelectron Spectroscopy (XPS) analysis on the surface of the positive electrode active material.

In addition, an average thickness of the coating layer may be 0.1 to 0.65 nm, and more specifically may be 0.38 to 0.65 nm. When the average thickness of the coating layer satisfies the above range, effects of reducing residual lithium of the positive electrode active material and improving capacity and lifespan characteristics can be preferably implemented.

Meanwhile, the average thickness of the coating layer can be obtained by controlling the number of cycles of the atomic layer deposition process, a temperature during the atomic layer deposition process, a supply amount of the aluminum-containing gas per cycle, a supply amount of the reactant per cycle, and the like. This will be described in more detail below in the method for manufacturing the positive electrode active material.

In addition, the average thickness of the coating layer can be measured by the following method. First, a thickness of the coating layer for one positive electrode active material particle (single particle) can be calculated by analyzing a cross-sectional TEM image after FIB (Focused Ion Beam) milling of the positive electrode active material particle, randomly selecting 10 positions among surface portions of the positive electrode active material particle, and obtaining an average value of coating layer thicknesses at the selected positions. Next, the average thickness of the coating layer can be calculated by obtaining an average of coating layer thicknesses measured by the same method for 20 arbitrary positive electrode active material particles in positive electrode active material powder.

In addition, an average of difference values between a maximum thickness and a minimum thickness of the coating layer may be 0.5 nm or less. That is, since the coating layer according to the present invention is manufactured through a coating process using an atomic layer deposition method, thickness uniformity of the coating layer can be improved. Accordingly, resistance of the coating layer can be reduced, so that effects of improving capacity and lifespan characteristics of the positive electrode active material can be more preferably implemented.

Meanwhile, the average of difference values between the maximum thickness and the minimum thickness of the coating layer can be obtained by controlling the number of cycles of the atomic layer deposition process, a temperature during the atomic layer deposition process, a supply amount of the aluminum-containing gas per cycle, a supply amount of the reactant per cycle, and the like. This will be described in more detail below in the method for manufacturing the positive electrode active material.

In addition, the average of difference values between the maximum thickness and the minimum thickness of the coating layer can be measured by the following method. First, a difference value between a maximum thickness and a minimum thickness for one positive electrode active material particle (single particle) can be calculated by analyzing a cross-sectional TEM image after FIB (Focused Ion Beam) milling of the positive electrode active material particle, calculating the maximum thickness and the minimum thickness among the entire coating layer surrounding the active material particle, and obtaining a difference value therebetween. Next, the average of difference values between the maximum thickness and the minimum thickness of the coating layer can be calculated by obtaining an average of coating layer thicknesses measured by the same method for 20 arbitrary positive electrode active material particles in positive electrode active material powder.

In addition, a content of an aluminum element in the positive electrode active material may be 550 to 4000 ppm, and more specifically may be 1600 to 4000 ppm, based on the total weight of the positive electrode active material. When the content of the aluminum element in the positive electrode active material satisfies the above range, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. Accordingly, effects of improving capacity and lifespan characteristics of the positive electrode active material can be more preferably implemented.

Meanwhile, in the present specification, the content of the aluminum element in the positive electrode active material may be measured through ICP (inductively coupled plasma spectroscopy) component analysis.

In addition, the lithium metal oxide may have a ratio of a peak intensity of a (003) plane to a peak intensity of a (104) plane (I(003)/I(104)) of 1.514 or more when analyzed by an X-ray diffraction pattern. The ratio of the peak intensity of the (003) plane to the peak intensity of the (104) plane (I(003)/I(104)) when the lithium metal oxide is analyzed by an X-ray diffraction pattern may be used as a measure of a so-called cation mixing ratio. At this time, a larger I(003)/I(104) peak intensity ratio may mean a smaller cation mixing ratio. Cation mixing refers to a phenomenon in which transition metal cations in a transition metal layer are partially substituted into a lithium layer in a lithium metal oxide having a layered crystal structure, that is, a layered crystal structure in which lithium layers and transition metal layers are alternately stacked. At this time, a ratio of transition metal cations substituted in the lithium layer is referred to as a cation mixing ratio. In particular, nickel ions having an ionic radius similar to that of lithium ions are representative transition metals that are substituted into the lithium layer. At this time, when the cation mixing ratio of the lithium metal oxide is too large, mobility of lithium ions in the lithium layer may be reduced, thereby deteriorating capacity and lifespan characteristics of the battery. Accordingly, as the lithium metal oxide according to the present invention satisfies the above range of the I(003)/I(104) peak intensity ratio, effects of improving capacity and lifespan characteristics of the positive electrode active material can be more preferably implemented. In particular, the present inventors confirmed that, when various conditions of the coating process according to the present invention are satisfied, the I(003)/I(104) peak intensity ratio is appropriately implemented within the above range.

In addition, the LiAlO₂ may be amorphous, and the Al₂O₃ may be amorphous. As LiAlO₂ and Al₂O₃, which are aluminum compounds in the coating layer, are amorphous, lithium ion mobility can be improved, so that capacity and output characteristics of the positive electrode active material can be more preferably implemented. The amorphousness of the aluminum compounds can be confirmed through TEM (transmission electron microscope) image analysis or X-ray diffraction pattern analysis of the positive electrode active material.

Meanwhile, as described above, the positive electrode active material according to the present invention is coated with the aluminum coating layer, and thus may have a residual lithium content of 33500 ppm or less, and more specifically 10000 ppm or less. Accordingly, gas generation and a battery swelling phenomenon due to side reactions between residual lithium and an electrolyte solution can be suppressed, thereby improving safety of the battery.

The lithium metal oxide according to the present invention may more specifically be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium metal oxide of Chemical Formula 1, nickel may be included in an amount corresponding to x, that is, 0.8≤x<1. When the nickel content satisfies the above range, high capacity of a battery can be achieved.

In the lithium metal oxide of Chemical Formula 1, cobalt may be included in an amount corresponding to y, that is, 0≤y≤0.2. When the cobalt content is too small, growth of crystal grain size may be inhibited, and output characteristics may deteriorate. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production costs may increase and active material stability may decrease. When the manganese content is too large, capacity and output characteristics of the battery may deteriorate.

In the lithium metal oxide of Chemical Formula 1, M, which is another doping element, may be included in an amount corresponding to w, that is, 0≤w≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement another doping effect.

### 2. Method for Manufacturing Positive Electrode Active Material

Another embodiment of the present invention provides a method for manufacturing a positive electrode active material for a lithium secondary battery, including preparing a single-particle-form lithium metal oxide having a nickel (Ni)-containing layered crystal structure; and forming a coating layer containing an aluminum compound on the lithium metal oxide by an atomic layer deposition method, wherein a water-washing process is not performed after preparing the lithium metal oxide and before forming the coating layer, the aluminum compound includes LiAlO₂ and Al₂O₃, and a content of LiAlO₂ is 12 to 40 wt% based on a total weight of LiAlO₂ and Al₂O₃.

Hereinafter, the method for manufacturing a positive electrode active material for a lithium secondary battery according to another embodiment of the present invention will be described in detail step by step.

First, a single-particle-form lithium metal oxide having a nickel (Ni)-containing layered crystal structure is prepared.

More specifically, the single-particle-form lithium metal oxide may be prepared by preparing a metal precursor, mixing and calcining the metal precursor and a lithium raw material, and pulverizing the calcined product.

More specifically, the metal precursor may be a metal hydroxide.

The metal precursor may be prepared, for example, by adding a complexing agent-containing solution and a pH adjusting agent-containing solution to a metal-containing solution including a nickel raw material, a manganese raw material, or a cobalt raw material to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, or the cobalt raw material to a solvent, specifically water, or a mixture of water and an organic solvent uniformly miscible with water, for example, alcohol or the like.

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water, for example, alcohol or the like, may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water, for example, alcohol or the like, may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, at a temperature of 30 to 70°C, and at a pH of 10 to 13.

By the above process, particles of a nickel(-or manganese-cobalt) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, or manganese in the precursor may be controlled by controlling the concentrations of the nickel raw material, the cobalt raw material, or the manganese raw material. That is, the concentrations of the nickel raw material, the cobalt raw material, and the manganese raw material may be controlled such that the molar ratio of nickel, cobalt, or manganese in the lithium metal oxide, which is the final product, is within the range according to the present invention.

As the lithium raw material, a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 750 to 1000°C. When the calcination temperature is too low, the single-particle-form lithium metal oxide may not be formed. When the calcination temperature is too high, crystal structure defects due to over-calcination may occur, and electrochemical characteristics may deteriorate.

In addition, the calcination may be performed for 5 to 20 hours. When the calcination time is too short, the single-particle-form lithium metal oxide may not be formed. When the calcination time is too long, crystal structure defects due to over-calcination may occur, and electrochemical characteristics may deteriorate.

In addition, the atmosphere during calcination is not particularly limited, but, for example, calcination may be performed in an oxygen (O₂) or air atmosphere.

The pulverization may be performed according to a general pulverization process in the art, and for example, may be performed using a jet mill.

At this time, a water-washing process may not be performed after the step of preparing the lithium metal oxide and before the step of forming the coating layer. A water-washing process is generally performed to remove residual lithium remaining on the surface of the synthesized lithium metal oxide. However, the water-washing process may damage the surface structure of the positive electrode active material and deteriorate electrochemical characteristics such as capacity, output, and lifespan of the positive electrode active material. Accordingly, in the present invention, an effect of reducing residual lithium can be substituted by a coating process to be described below instead of a water-washing process. Accordingly, both an effect of reducing residual lithium and an effect of preserving electrochemical characteristics of the positive electrode active material can be implemented.

Next, a coating layer containing an aluminum compound is formed on the lithium metal oxide by an atomic layer deposition method.

At this time, the atomic layer deposition may be performed for 1 to 7 cycles, and more specifically may be performed for 3 to 7 cycles. When the number of cycles performed during atomic layer deposition satisfies the above range, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. Accordingly, effects of improving capacity and lifespan characteristics of the positive electrode active material can be more preferably implemented.

More specifically, one cycle of the atomic layer deposition may include supplying an aluminum-containing gas onto the lithium metal oxide to adsorb the aluminum-containing gas onto the lithium metal oxide; and supplying and reacting a reactant onto the lithium metal oxide onto which the aluminum-containing gas is adsorbed.

At this time, a supply amount of the aluminum-containing gas may be 0.2 to 1.6 wt%, and more specifically may be 0.3 to 1.0 wt%, based on the total weight of the lithium metal oxide. When the supply amount of the aluminum-containing gas satisfies the above range, aluminum coating can be appropriately performed in an atomic layer unit per cycle. Accordingly, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. In addition, effects of improving capacity and lifespan characteristics of the positive electrode active material can be more preferably implemented.

The supply amount of the reactant may be 0.002 to 0.01 wt% based on the total weight of the lithium metal oxide. When the supply amount of the reactant satisfies the above range, aluminum coating can be appropriately performed in an atomic layer unit per cycle. Accordingly, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. In addition, effects of improving capacity and lifespan characteristics of the positive electrode active material can be more preferably implemented.

The aluminum-containing gas may be, for example, trimethoxyaluminum (Tri Methoxy Aluminium, TMA).

The reactant may be, for example, water (H₂O) or ozone (O₃).

The atomic layer deposition may be performed at a temperature of 150 to 300°C. When the atomic layer deposition temperature satisfies the above range, the reaction between the aluminum-containing gas and the reactant is smoothly performed, and thus the aluminum coating layer can be easily formed. Accordingly, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. In addition, effects of improving capacity and lifespan characteristics of the positive electrode active material can be more preferably implemented.

The atomic layer deposition may be performed at a pressure of 1 to 10 torr. When the pressure during atomic layer deposition satisfies the above range, the reaction between the aluminum-containing gas and the reactant is smoothly performed, and thus the aluminum coating layer can be easily formed. Accordingly, various physical properties of the positive electrode active material, such as the content of LiAlO₂ based on the total weight of LiAlO₂ and Al₂O₃, the average thickness of the coating layer, and the average of difference values between the maximum thickness and the minimum thickness of the coating layer, can be appropriately implemented within the ranges according to the present invention. In addition, effects of improving capacity and lifespan characteristics of the positive electrode active material can be more preferably implemented.

### 3. Positive Electrode and Lithium Secondary Battery

Still another embodiment of the present invention provides a positive electrode for a lithium secondary battery, including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

The electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

(Preparation of Lithium Metal Oxide) A single-particle-form lithium metal oxide having a composition of LiNi_{0.88}Co_{0.095}Mn_{0.025}O₂ was prepared.

At this time, after synthesis of the lithium metal oxide, a separate water-washing process was not performed.

(Coating) A fluidized-bed type atomic layer deposition reactor was used, and low-vacuum conditions were maintained such that the reaction temperature was 150 to 300°C and the pressure in the chamber was maintained at 1 to 10 torr. As a precursor, trimethylaluminum (TMA, Al(CH₃)₃) was used as an aluminum-containing gas, and water (H₂O) was used as a reactant.

The prepared lithium metal oxide was introduced into the atomic layer deposition reactor, TMA was injected together with N₂ gas to allow TMA to be chemisorbed and saturated on the lithium metal oxide base material, and then H₂O was injected again to cause a chemical reaction, thereby forming an aluminum compound-containing coating layer. In addition, the input amount of TMA per cycle was 0.5 wt% based on the total weight of the lithium metal oxide, and the input amount of H₂O per cycle was 0.005 wt% based on the total weight of the lithium metal oxide.

This series of processes is referred to as one cycle, and a total of one cycle was performed.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The prepared slurry was coated on a 20 µm-thick Al foil using a doctor blade, and then dried and rolled. The electrode loading amount was 15.4 mg/cm², and the rolling density (25°C, 20 kN) was 3.6 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo metal).

### Example 2

A positive electrode active material and a lithium secondary battery were manufactured in the same manner as in Example 1, except that, in the coating step, the number of atomic layer deposition cycles was two cycles.

### Example 3

A positive electrode active material and a lithium secondary battery were manufactured in the same manner as in Example 1, except that, in the coating step, the number of atomic layer deposition cycles was four cycles.

### Example 4

A positive electrode active material and a lithium secondary battery were manufactured in the same manner as in Example 1, except that, in the coating step, the number of atomic layer deposition cycles was six cycles.

### Comparative Example 1

A positive electrode active material and a lithium secondary battery were manufactured in the same manner as in Example 1, except that no coating process was performed after preparation of the lithium metal oxide.

### Comparative Example 2

A positive electrode active material and a lithium secondary battery were manufactured in the same manner as in Example 1, except that, after preparation of the lithium metal oxide and before performing the coating process, a water-washing process using distilled water was performed.

### Comparative Example 3

A positive electrode active material and a lithium secondary battery were manufactured in the same manner as in Example 1, except that, in the coating step, the number of atomic layer deposition cycles was eight cycles.

Table 1 below summarizes process conditions of the Examples and Comparative Examples.

**[Table 1]**

| | TMA Input Amount Based on Total Weight of Lithium Metal Oxide Per Cycle (wt%) | H₂O Input Amount Based on Total Weight of Lithium Metal Oxide Per Cycle (wt%) | Whether Water-Washing Process Was Performed | Number of Atomic Layer Deposition Cycles |
|---|---|---|---|---|
| Comparative Example 1 | - | - | Not water-washed | - |
| Comparative Example 2 | 0.5 | 0.005 | Water-washed | 1 |
| Example 1 | 0.5 | 0.005 | Not water-washed | 1 |
| Example 2 | 0.5 | 0.005 | Not water-washed | 2 |
| Example 3 | 0.5 | 0.005 | Not water-washed | 4 |
| Example 4 | 0.5 | 0.005 | Not water-washed | 6 |
| Comparative Example 3 | 0.5 | 0.005 | Not water-washed | 8 |

Tables 2 and 3 below summarize evaluation results of physical properties of positive electrode active materials and electrochemical characteristics of lithium secondary batteries according to Experimental Examples 2 and 3 described below.

**[Table 2]**

| | Average Thickness of Coating Layer (nm) | Average Difference Between Maximum Thickness and Minimum Thickness of Coating Layer (nm) | LiAlO₂/(Al₂O₃ +LiAlO₂) Weight Ratio (%) | Al Element Content (ppm) | LiOH (ppm) | Li₂CO₃ (ppm) | Total (ppm) | I(003)/I(104) Peak Intensity Ratio |
|---|---|---|---|---|---|---|---|---|
| Comparative Example 1 | - | - | - | 0 | 27,474 | 6,444 | 33,918 | 1.5138 |
| Comparative Example 2 | 0.12 | 0.12 | 9 | 501 | 18,234 | 4,503 | 22,737 | 1.5248 |
| Example 1 | 0.16 | 0.06 | 16.5 | 662 | 26,989 | 6,350 | 33,339 | 1.5259 |
| Example 2 | 0.32 | 0.13 | 26.1 | 1,220 | 20,445 | 6,223 | 26,668 | 1.5246 |
| Example 3 | 0.4 | 0.15 | 29.1 | 2,144 | 6,577 | 2,450 | 9,027 | 1.5313 |
| Example 4 | 0.58 | 0.27 | 35.9 | 3,722 | 4,556 | 1,982 | 6,538 | 1.5149 |
| Comparative Example 3 | 0.78 | 1.3 | 41.3 | 4,230 | 4,102 | 2,234 | 6,336 | 1.5060 |

**[Table 3]**

| | Initial Charge Capacity (mAh/g) | Initial Discharge Capacity (mAh/g) | Initial Efficiency (%) | Capacity Retention Rate (45°C, 30 cycles, %) |
|---|---|---|---|---|
| Comparative Example 1 | 219.7 | 193.9 | 88.3 | 93.3 |
| Comparative Example 2 | 220.3 | 195.3 | 88.7 | 92.5 |
| Example 1 | 221.5 | 196.7 | 88.8 | 93.6 |
| Example 2 | 220.3 | 197.8 | 89.8 | 94 |
| Example 3 | 222.5 | 197.5 | 88.8 | 93.8 |
| Example 4 | 221.3 | 194.3 | 87.8 | 93.4 |
| Comparative Example 3 | 219.3 | 191.2 | 87.2 | 93.1 |

### Experimental Example 1: Evaluation of SEM Image of Positive Electrode Active Material

An SEM (scanning electron microscope) image of the positive electrode active material manufactured according to Example 1 was observed and is shown in FIG. 1.

Referring to FIG. 1, it was confirmed that the positive electrode active material of Example 1 was in a single-particle form, and since a plurality of spaced coating-attached particles and the like were not observed on the particle surface, it was confirmed that the coating layer was a conformal type uniformly surrounding the entire particle surface.

### Experimental Example 2: Evaluation of Physical Properties of Positive Electrode Active Material

### (1) Evaluation of Average Thickness of Coating Layer

First, the thickness of the coating layer for one positive electrode active material particle (single particle) was calculated by analyzing a cross-sectional TEM image after FIB (Focused Ion Beam) milling of the positive electrode active material particle, randomly selecting 10 positions among surface portions of the positive electrode active material particle, and obtaining an average value of coating layer thicknesses at the selected positions. Next, the average thickness of the coating layer was calculated by obtaining an average of coating layer thicknesses measured by the same method for 20 arbitrary positive electrode active material particles in positive electrode active material powder.

### (2) Evaluation of Average of Difference Values Between Maximum Thickness and Minimum Thickness of Coating Layer

First, the difference value between a maximum thickness and a minimum thickness for one positive electrode active material particle (single particle) was calculated by analyzing a cross-sectional TEM image after FIB (Focused Ion Beam) milling of the positive electrode active material particle, calculating the maximum thickness and the minimum thickness among the entire coating layer surrounding the active material particle, and obtaining a difference value therebetween. Next, the average of difference values between the maximum thickness and the minimum thickness of the coating layer was calculated by obtaining an average of coating layer thicknesses measured by the same method for 20 arbitrary positive electrode active material particles in positive electrode active material powder.

### (3) Evaluation of Weight Ratio of LiAlO₂ to Total Weight of LiAlO₂ and Al₂O₃ in Coating Layer

The weight ratio of LiAlO₂ to the total weight of LiAlO₂ and Al₂O₃ in the coating layer was evaluated through X-ray Photoelectron Spectroscopy (XPS) analysis on the surface of the positive electrode active material.

### (4) Evaluation of Al Element Content in Positive Electrode Active Material

The Al element content in the positive electrode active material was evaluated through ICP (inductively coupled plasma spectroscopy) component analysis.

### (5) Evaluation of Residual Lithium Content

After distilled water was added to the positive electrode active material, residual lithium was extracted using a stirrer, and the positive electrode active material powder and the extract were separated using a filtering apparatus. Thereafter, the extract was measured through neutralization titration using a Metrohm potentiometric titrator to evaluate residual lithium.

### (6) Evaluation of I(003)/I(104) Peak Intensity Ratio

The I(003)/I(104) peak intensity ratio was evaluated through X-ray Diffraction pattern analysis.

### Experimental Example 3: Evaluation of Electrochemical Characteristics of Lithium Secondary Battery

### (1) Evaluation of Initial Capacity and Initial Efficiency

After lithium secondary battery half cells were manufactured and aged at 25°C for 12 hours, a charge/discharge test was performed at 25°C. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of High-Temperature Capacity Retention Rate (45°C, 30 cycles)

After lithium secondary battery half cells were manufactured, at 45°C, charging was performed to 4.25 V at a constant current of 0.5 C, followed by switching to constant voltage, and charging was continued until the end current reached 0.05 C. After charging, a rest time of 10 minutes was provided, and discharge was performed to 2.5 V at a constant current of 1.0 C. Charging and discharging were performed 30 times under such charge/discharge cycle conditions, and a capacity retention rate of the 30th cycle relative to the first cycle was calculated.

Referring to Table 1, in the case of Examples 1 to 4, in which various coating process conditions according to the present invention, such as the number of atomic layer deposition cycles, TMA and H₂O input amounts relative to the lithium metal oxide during one cycle, and non-performance of a water-washing process, were controlled, it was confirmed that various physical properties, including the average thickness of the coating layer and the weight ratio of LiAlO₂ to the total weight of LiAlO₂ and Al₂O₃ in the coating layer, were appropriately obtained within the ranges according to the present invention. As a result, it was confirmed that the residual lithium content was reduced compared with Comparative Example 1, which was a lithium metal oxide base material, and capacity (initial discharge capacity) and lifespan (capacity retention rate) characteristics were improved.

In contrast, in the case of Comparative Example 1, which was a lithium metal oxide base material, it was confirmed that the residual lithium content was too high, and capacity and lifespan characteristics were deteriorated compared with the Examples.

In the case of Comparative Example 2, as a result of performing a water-washing process, it was confirmed that, in particular, the weight ratio of LiAlO₂ to the total weight of LiAlO₂ and Al₂O₃ in the coating layer was smaller than that of the Examples, and the content of the Al element in the positive electrode active material was reduced. It appears that the reduction in the Al element content is a result of a reaction between residual lithium and the aluminum source not being smoothly performed during the coating process reaction. In addition, it was confirmed that capacity and lifespan characteristics of the battery were deteriorated compared with the Examples.

In the case of Comparative Example 3, as a result of the number of atomic layer deposition cycles being too large, the average thickness of the coating layer was obtained to be too large, the average difference between the maximum thickness and the minimum thickness of the coating layer was too large and coating uniformity was deteriorated, the weight ratio of LiAlO₂ to the total weight of LiAlO₂ and Al₂O₃ in the coating layer was obtained to be too large, and the I(003)/I(104) peak intensity ratio was obtained to be smaller than those of the Examples, confirming that the cation mixing ratio increased. In addition, it was confirmed that capacity and lifespan characteristics of the battery were deteriorated compared with the Examples.

Meanwhile, when the Examples were compared with each other in more detail, it was confirmed that in Examples 3 and 4, in which the number of atomic layer deposition cycles was more appropriately controlled, the residual lithium content was more preferably implemented to be 10000 ppm or less.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
a single-particle-form lithium metal oxide having a nickel (Ni)-containing layered crystal structure; and
a coating layer surrounding an entire surface of the lithium metal oxide and containing an aluminum (Al) compound,
wherein the aluminum compound comprises LiAlO₂ and Al₂O₃, and
wherein a content of LiAlO₂ is 12 to 40 wt% based on a total weight of LiAlO₂ and Al₂O₃.

2. The positive electrode active material for a lithium secondary battery of claim 1,
wherein an average thickness of the coating layer is 0.1 to 0.65 nm.

3. The positive electrode active material for a lithium secondary battery of claim 1,
wherein an average of difference values between a maximum thickness and a minimum thickness of the coating layer is 0.5 nm or less.

4. The positive electrode active material for a lithium secondary battery of claim 1,
wherein the lithium metal oxide has a ratio of a peak intensity of a (003) plane to a peak intensity of a (104) plane (I(003)/I(104)) of 1.514 or more when analyzed by an X-ray diffraction pattern.

5. The positive electrode active material for a lithium secondary battery of claim 1,
wherein a content of an aluminum element in the positive electrode active material is 550 to 4000 ppm based on a total weight of the positive electrode active material.

6. The positive electrode active material for a lithium secondary battery of claim 1,
wherein the LiAlO₂ is amorphous.

7. The positive electrode active material for a lithium secondary battery of claim 1,
wherein the Al₂O₃ is amorphous.

8. The positive electrode active material for a lithium secondary battery of claim 1,
wherein a residual lithium content is 33500 ppm or less.

9. The positive electrode active material for a lithium secondary battery of claim 1,
wherein a content of nickel in the lithium metal oxide is 80 mol% or more based on a total number of moles of metals excluding lithium.

10. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

11. A method for manufacturing a positive electrode active material for a lithium secondary battery, comprising:
preparing a single-particle-form lithium metal oxide having a nickel (Ni)-containing layered crystal structure; and
forming a coating layer containing an aluminum compound on the lithium metal oxide by an atomic layer deposition method,
wherein a water-washing process is not performed after preparing the lithium metal oxide and before forming the coating layer,
wherein the aluminum compound comprises LiAlO₂ and Al₂O₃, and
wherein a content of LiAlO₂ is 12 to 40 wt% based on a total weight of LiAlO₂ and Al₂O₃.

12. The method for manufacturing a positive electrode active material for a lithium secondary battery of claim 11,
wherein the atomic layer deposition is performed for 1 to 7 cycles.

13. The method for manufacturing a positive electrode active material for a lithium secondary battery of claim 12,
wherein one cycle of the atomic layer deposition comprises:
supplying an aluminum-containing gas onto the lithium metal oxide to adsorb the aluminum-containing gas onto the lithium metal oxide; and
supplying and reacting a reactant onto the lithium metal oxide onto which the aluminum-containing gas is adsorbed.

14. The method for manufacturing a positive electrode active material for a lithium secondary battery of claim 13,
wherein a supply amount of the aluminum-containing gas is 0.2 to 1.6 wt% based on a total weight of the lithium metal oxide.

15. The method for manufacturing a positive electrode active material for a lithium secondary battery of claim 13,
wherein a supply amount of the reactant is 0.002 to 0.01 wt% based on a total weight of the lithium metal oxide.

16. The method for manufacturing a positive electrode active material for a lithium secondary battery of claim 11,
wherein the atomic layer deposition is performed at a temperature of 150 to 300°C.

17. The method for manufacturing a positive electrode active material for a lithium secondary battery of claim 11,
wherein the atomic layer deposition is performed at a pressure of 1 to 10 torr.

18. A positive electrode for a lithium secondary battery, comprising the positive electrode active material of claim 1.

19. A lithium secondary battery comprising the positive electrode for a lithium secondary battery of claim 18.
